# EUROPEAN PATENT SPECIFICATION

(11) **EP 4 181 294 B1**
(45) Date of publication and mention of the grant of the patent: **01.04.2026**
(21) Application number: 22753009.4
(22) Date of filing: 10.02.2022
(51) Int. Cl.: H01M 50/242, H01M 50/249, H01M 50/211

(54) **BATTERY MODULE HAVING STRUCTURE ENABLING UNIFORM PRESSURE TO BE APPLIED DURING SWELLING, AND BATTERY PACK AND VEHICLE COMPRISING SAME**
BATTERIEMODUL MIT STRUKTUR ZUR ANWENDUNG EINES GLEICHMÄSSIGEN DRUCKS WÄHREND DES ANSCHWELLENS SOWIE BATTERIEPACK UND FAHRZEUG DAMIT
MODULE DE BATTERIE AYANT UNE STRUCTURE PERMETTANT D'APPLIQUER UNE PRESSION UNIFORME PENDANT LE GONFLEMENT, ET BLOC-BATTERIE ET VÉHICULE LE COMPRENANT

(30) Priority: 15.02.2021 KR 20210020137
(43) Date of publication of application: 17.05.2023
(73) Proprietor: LG Energy Solution, Ltd., Seoul 07335 (KR)
(72) Inventor: KIM, Dong-Wook, Daejeon 34122 (KR)
(74) Representative: Goddar, Heinz J.
(86) International application number: PCT/KR2022/002052
(87) International publication number: WO 2022/173249

(56) References cited:
- EP-A1- 3 651 231
- WO-A1-2020/262812
- JP-A- 2009 182 001
- JP-A- 2015 149 238
- JP-A- 2016 035 876
- JP-A- 2016 035 876
- JP-A- 2017 037 789
- KR-A- 20170 135 597
- KR-A- 20190 054 709

## Description

### TECHNICAL FIELD

The present disclosure relates to a battery module having a structure allowing uniform pressure to be applied when swelling occurs, and a battery pack and a vehicle including the same. More specifically, the present disclosure relates to a battery module including a module housing in which a structural change is made to prevent pressure from being concentrated only in the central region of a battery cell when swelling of a battery cell occurs, and a battery pack and a vehicle including the same.

The present application claims priority to Korean Patent Application No. 10-2021-0020137 filed on February 15, 2021 in the Republic of Korea.

### BACKGROUND ART

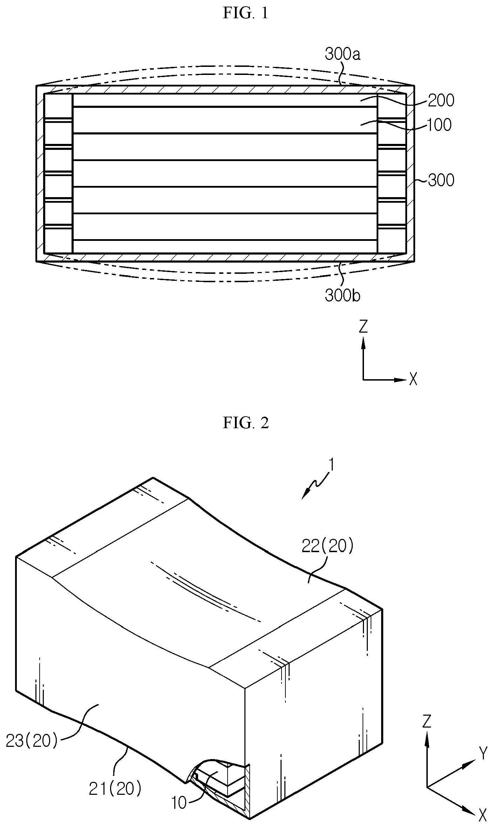

As shown in FIG. 1, a conventional battery module includes a cell stack including a battery cell 100 and a swelling absorbing pad 200, and a module housing 300 accommodating the cell stack. In the conventional battery module, an upper plate 300a and a lower plate 300b of the module housing 300 have an approximately flat shape.

When the upper plate 300a and the lower plate 300b of the module housing 300 have such a flat shape, the upper plate 300a and the lower plate 300b are bent upward and downward, respectively according to swelling of the battery cell 100.

Due to bending of the upper plate 300a and the lower plate 300b, the pressure of the upper plate 300a and the lower plate 300b with respect to the battery cell 100 is relatively low in the central region of the battery cell 100 and is relatively strong as approaching to the edge regions.

Accordingly, as the gas generated in the battery cell 100 is concentrated in the central region of the battery cell 100, the separator constituting the electrode assembly may show wrinkles, and it functions as a factor impeding the movement of electrons, thereby accelerating degradation of the battery cell 100.

In addition, when the pressure is concentrated on the edge regions of the battery cell 100, the expansion amount due to swelling in the central region is excessively large, which may cause tearing in the pouch module housing.

Therefore, there is a need for developing a battery module having a structure in which deviation of the pressure applied to the battery cell due to swelling is resolved and the bending rigidity of the module housing is improved at a position corresponding to the central region of the battery cell.

JP 2016-035876 A, WO 2020/262812 A1 and JP 2015149238 A respectively describe battery modules in accordance with the preamble of independent claim 1.

### DISCLOSURE

### Technical Problem

The present disclosure is designed to solve the problems of the related art, and therefore the present disclosure is directed to providing a battery module housing having a structure in which deviation of the pressure applied to a battery cell due to swelling is resolved and the bending rigidity of the module housing is improved at a position corresponding to the central region of the battery cell.

However, technical problems to be solved by the present disclosure are not limited to the above-described problems, and other problems not mentioned herein may be clearly understood by one of ordinary skill in the art from the following description of the present disclosure.

### Technical Solution

In one aspect of the present disclosure, there is provided a battery module including a cell stack including a plurality of battery cells; and a module housing including a base plate covering a lower surface of the cell stack, a cover plate covering an upper surface of the cell stack, and a connector connecting the base plate and the cover plate, and accommodating the cell stack, wherein the base plate and the cover plate have a curved shape so that the central region thereof is located closer to the cell stack than the edge regions.

The cell stack further includes a pair of swelling absorbing pads disposed at both outermost sides of the cell stack in a stacking direction.

Each of the pair of swelling absorbing pads has a shape in which the thickness of the central region is thinner than that of the edge regions.

Each of the pair of swelling absorbing pads may have a stepped shape so that the surfaces facing the base plate and the cover plate become lower from the edge regions toward the central region.

Each of the pair of swelling absorbing pads may have a curved shape so that the surfaces facing the base plate and the cover plate are in full contact with the base plate and the cover plate.

The connector may include an elongation portion having a relatively higher elongation than the peripheral region.

The elongation portion may correspond to a region made of a metal having a relatively higher elongation compared to the peripheral region.

The elongation portion may correspond to a region formed to be thinner than the peripheral region.

Meanwhile, in another aspect of the present disclosure, there is provided a battery pack including a battery module according to an embodiment of the present disclosure.

In another aspect of the present disclosure, there is provided a vehicle including a battery pack according to an embodiment of the present disclosure.

### Advantageous Effects

According to an aspect of the present disclosure, it is possible to resolve deviation of the pressure applied to a battery cell due to swelling, and to improve the bending rigidity of the module housing at a position corresponding to the central region of the battery cell.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawings.
FIG. 1 is a view illustrating a conventional battery module.
FIGS. 2 to 5 are views illustrating a battery module according to an embodiment of the present disclosure.
FIGS. 6 and 7 are views illustrating a shape in which a module housing is deformed due to swelling in a battery module according to an embodiment of the present disclosure.
FIGS. 8 and 9 are views illustrating various shapes of a swelling absorbing pad in a battery module according to an embodiment of the present disclosure.
FIGS. 10 to 12 are views illustrating a battery module according to another embodiment of the present disclosure.
FIGS. 13 and 14 are views illustrating a battery module according to still another embodiment of the present disclosure.
FIG. 15 is a view illustrating a battery pack according to an embodiment of the present disclosure.
FIG. 16 is a view illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

A battery module 1 according to an embodiment of the present disclosure will be described with reference to FIGS. 2 to 7. Referring to FIGS. 2 to 7, the battery module 1 according to an embodiment of the present disclosure includes a cell stack 10 and a module housing 20.

The cell stack 10 includes a plurality of battery cells 11. As the battery cell 11, for example, a pouch-type battery cell may be applied. The battery cell 11 includes a pair of electrode leads 11a extending to the outside of the battery cell 11 in a longitudinal direction (direction parallel to the X-axis) of the battery cell 11. The pair of electrode leads 11a may be drawn out in the same direction or in opposite directions. The plurality of battery cells 11 are stacked to face each other in a vertical direction (direction parallel to the Z-axis).

The cell stack 10 may further include a pair of swelling absorbing pads 12 disposed at both outermost sides of the cell stack 10 in a stacking direction (direction parallel to the Z-axis). The swelling absorbing pad 12 may be disposed between the battery cells 11 adjacent to each other in addition to both outermost sides of the cell stack 10 in a stacking direction. The swelling absorbing pad 12 may be compressed when swelling of the battery cell 11 occurs due to repeated charge/discharge, thereby absorbing volume expansion of the battery cell 11.

The swelling absorbing pad 12 may have a flat shape like the swelling absorbing pad 200 provided in the conventional battery module shown in FIG. 1, but may have a shape corresponding to a module housing 20 having a curved shape as described below. The specific shape of the swelling absorbing pad 12 will be described later in detail after the description of the module housing 20 of the present disclosure.

The module housing 20 includes a base plate 21, a cover plate 22, and a connector 23. The module housing 20 accommodates the cell stack 10 therein. The module housing 20 may be made of a metal material to ensure rigidity.

The base plate 21 covers a lower surface (surface parallel to the X-Y plane) of the cell stack 10. The cover plate 22 covers an upper surface (surface parallel to the X-Y plane) of the cell stack 10. The connector 23 connects the base plate 21 and the cover plate 22.

The connector 23 may be integrally formed with the base plate 21 and/or the cover plate 22. On the other hand, the connector 23 may be formed separately from the base plate 21 and/or the cover plate 22 and may be fastened to the base plate 21 and/or the cover plate 22 by welding, bolting, or the like.

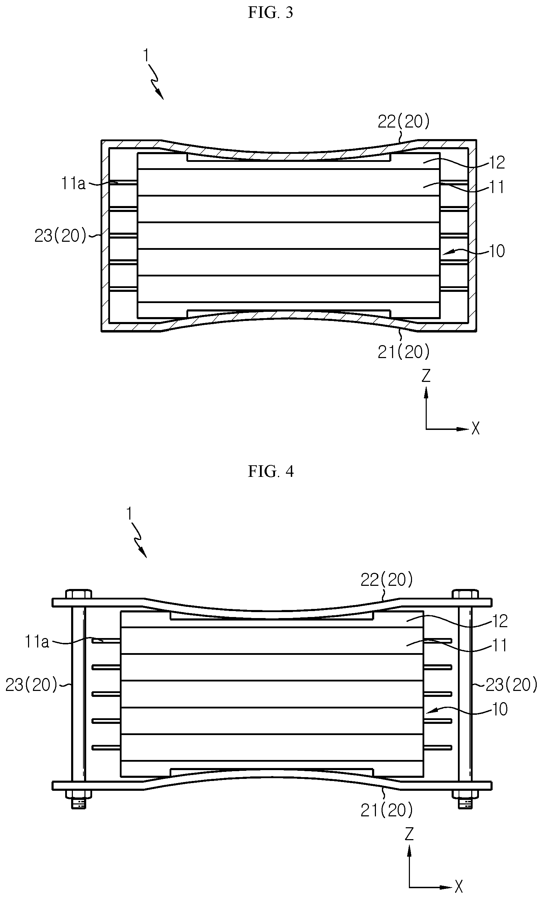

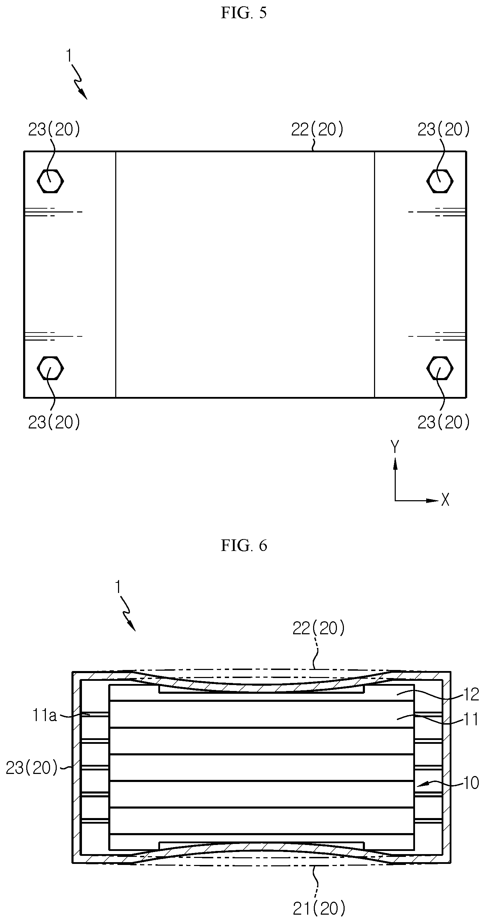

As shown in FIGS. 2 and 3, the connector 23 may have a shape including side plates forming a side surface of the module housing 20. On the other hand, as shown in FIGS. 4 and 5, the connector 23 may have a bar or beam shape for connecting and fixing the base plate 21 and the cover plate 22. In this case, the connector 23 may be fastened to four corner regions of each of the base plate 21 and the cover plate 22.

The base plate 21 and the cover plate 22 have a curved shape so that the central region thereof is located closer to the cell stack 10 than the edge regions. In the drawings of the present disclosure, there is shown only the case in which the swelling absorbing pad 12 is interposed between the base plate 21 and the battery cell 11 and between the cover plate 22 and the battery cell 11, respectively. However, the present disclosure is not limited thereto, but also includes the case in which the swelling absorbing pad 12 is excluded.

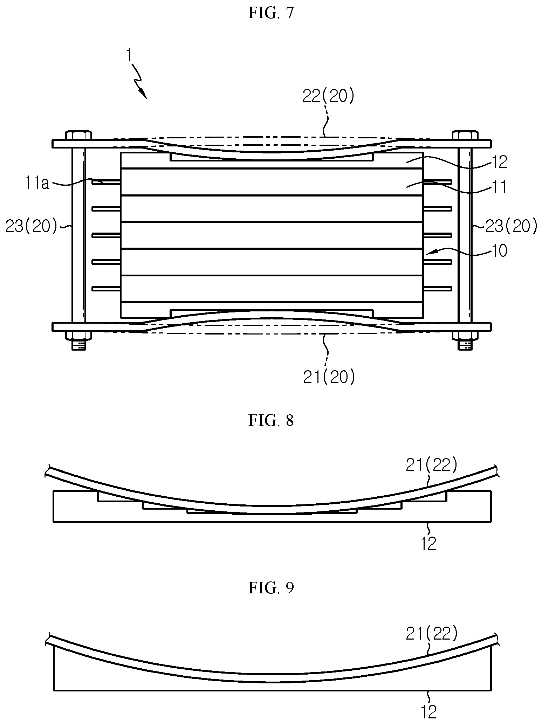

Referring to FIGS. 6 and 7, when swelling of the battery cell 11 occurs, the central region of the battery cell 11 comes into contact with the base plate 21 and the cover plate 22 prior to the edge regions thereof due to the curved shape of the base plate 21 and the cover plate 22. Therefore, the central region of the battery cell 11 is pressurized first until the volume expansion of the battery cell 11 occurs at a predetermined level or more due to swelling. When the volume expansion of the battery cell 11 is made at a predetermined level or more due to swelling, the edge regions of the battery cell 11 also come into contact with the base plate 21 and the cover plate 22, thereby allowing pressure to be applied over the entire area of the battery cell 11.

Meanwhile, when the battery module 1 according to an embodiment of the present disclosure includes a pair of swelling absorbing pads 12 located at both outermost sides of the cell stack 10 in a stacking direction, each of the pair of swelling absorbing pads 12 may have a shape in which the thickness of the central region thereof is thinner than that of the edge regions thereof. In this case, the contact area between the cell stack 10 and the base plate 21 and the contact area between the cell stack 10 and the cover plate 22 may be increased. Therefore, when the volume expansion occurs due to swelling of the battery cell 11, uniform pressure may be applied over the entire area of the battery cell 11.

Referring to FIGS. 2 to 8, each of the pair of swelling absorbing pads 12 may have a stepped shape so that a surface facing the base plate 21 and the cover plate 22 is gradually lowering from the edge regions toward the central region. In a stepped shape formed on the swelling absorbing pad 12, one stepped structure may be provided as shown in FIGS. 2 to 7, or a plurality of stepped structures may be provided as shown in FIG. 8.

Referring to FIG. 9, unlike those shown in FIGS. 2 to 8, each of the pair of swelling absorbing pads 12 has a curved shape in which a surface facing the base plate 21 and the cover plate 22 is in full contact with the base plate 21 and the cover plate 22.

As described above, the battery module 1 according to an embodiment of the present disclosure includes the base plate 21 and the cover plate 22 having a curved shape, and optionally includes the swelling absorbing pad 12 having a shape corresponding to the base plate 21 and the cover plate 22, thereby allowing uniform pressure to be applied over the entire area of the battery cell 11 when swelling occurs.

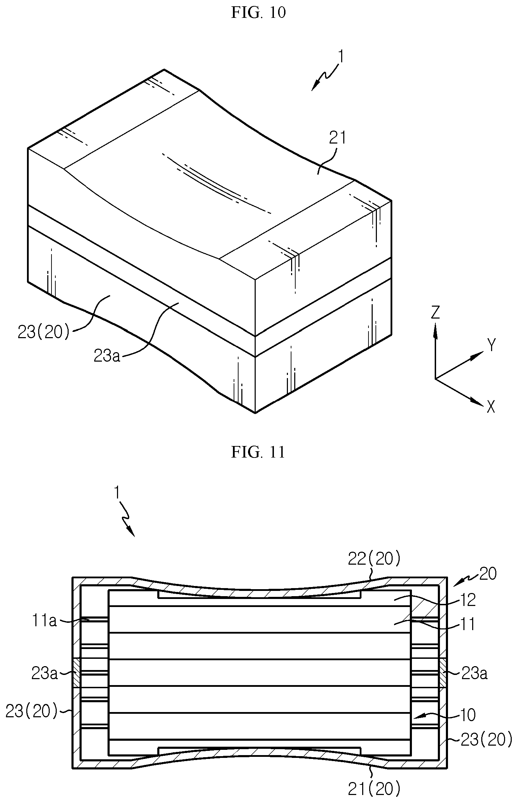

Next, the battery module 1 according to another embodiment of the present disclosure will be described with reference to FIGS. 10 to 14. The battery module 1 according to another embodiment of the present disclosure may include the same characteristics as the battery module 1 according to the previous embodiment, except that the elongation portion 23a is provided in the connector 23 as compared with the battery module 1 according to the previous embodiment. Therefore, in describing the battery module 1 according to another embodiment of the present disclosure, the connector 23 may be intensively described, and a description overlapping with the previous embodiment may be omitted.

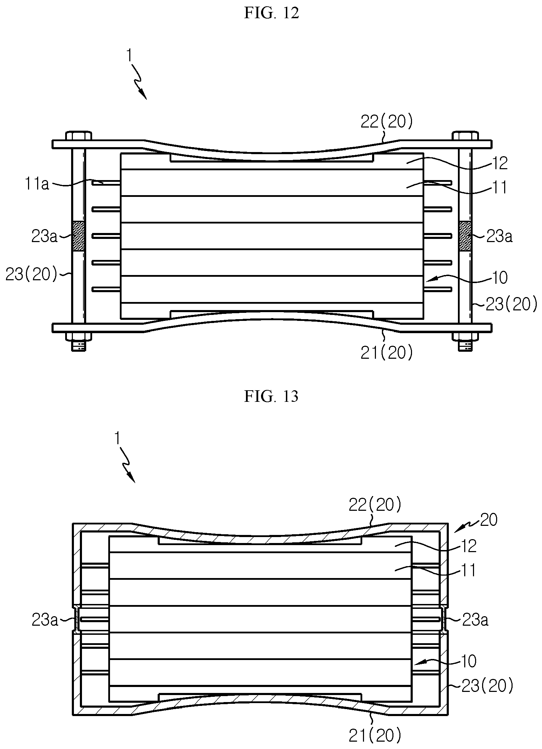

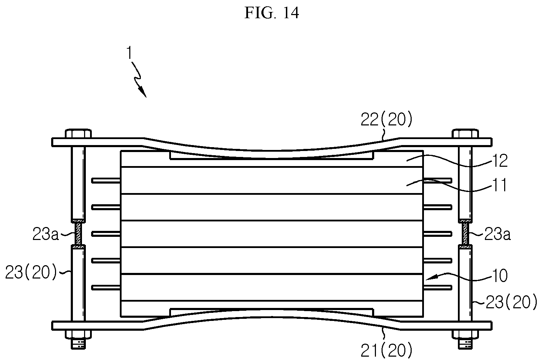

Referring to FIGS. 10 to 14, the connector 23 includes an elongation portion 23a having a relatively higher elongation than the peripheral region. As shown in FIGS. 10 to 12, the elongation portion 23a may correspond to a region made of a metal having a relatively lower elongation than the peripheral region. On the other hand, as shown in FIGS. 13 and 14, the elongation portion 23a may correspond to a region formed to be thinner than the peripheral region.

The elongation portion 23a may be finely extended when a tensile force exceeding a predetermined level is applied to the connector 23 as the base plate 21 is subjected to a downward force and the cover plate 22 is subjected to an upward force due to the pressure caused by swelling. Due to the elongation of the elongation portion 23a, it is possible to prevent the pressure applied to the battery cell 11 from being excessively increased. The metal material constituting the elongation portion 23a and/or the thickness of the elongation portion 23a may be appropriately selected in consideration of the magnitude of pressure according to swelling of the battery cell 11.

As described above, the battery module 1 according to another embodiment of the present disclosure may have a structure in which the connector 23 may be finely extended when a tensile force exceeding a predetermined level is applied, in addition to a structure in which the pressure due to swelling may be uniformly applied over the entire area of the battery cell 11. Therefore, in the battery module 1 according to another embodiment of the present disclosure, it is possible to prevent damage to the battery cell 11 due to excessively large pressure applied to the battery cell 11.

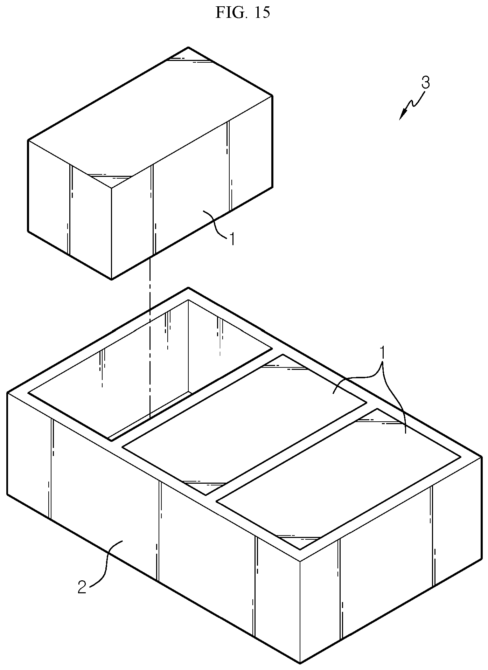

Referring to FIG. 15, a battery pack 3 according to an embodiment of the present disclosure includes at least one battery module 1 according to the present disclosure. The battery pack 3 may have a shape in which the battery module 1 is accommodated in the pack housing 2.

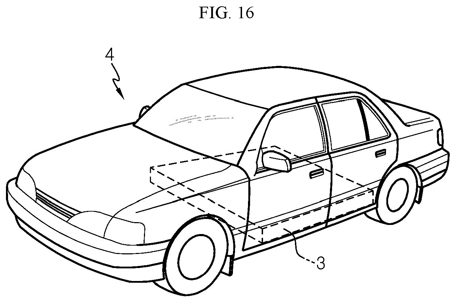

Meanwhile, referring to FIG. 16, a vehicle 4 according to an embodiment of the present disclosure includes the battery pack 3 according to an embodiment of the present disclosure as described above. The vehicle 4 may be, for example, an electric vehicle operated by the power from the battery pack 3.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Reference Signs]

1: battery module
2: pack housing
3: battery pack
4: vehicle
10: cell stack
11: battery cell
12: swelling absorbing pad
20: module housing
21: base plate
22: cover plate
23: connector
23a: elongation portion

## Claims

1. A battery module (1) comprising:
a cell stack (10) comprising a plurality of battery cells; and
a module housing (20) comprising a base plate (21) covering a lower surface of the cell stack (10), a cover plate (22) covering an upper surface of the cell stack (10), and a connector (23) connecting the base plate (21) and the cover plate (22), and accommodating the cell stack (10),
wherein the base plate (21) and the cover plate (22) have a curved shape so that the central region thereof is located closer to the cell stack (10) than the edge regions, **characterized in that**
the cell stack (10) further comprises a pair of swelling absorbing pads (12) disposed at both outermost sides of the cell stack (10) in a stacking direction (Z), and
each of the pair of swelling absorbing pads (12) has a shape in which the thickness of the central region is thinner than that of the edge regions.

2. The battery module according to claim 1,
wherein each of the pair of swelling absorbing pads (12) has a stepped shape so that the surfaces facing the base plate (21) and the cover plate (22) become lower from the edge regions toward the central region.

3. The battery module according to claim 1,
wherein each of the pair of swelling absorbing pads (12) has a curved shape so that the surfaces facing the base plate (21) and the cover plate (22) are in full contact with the base plate (21) and the cover plate (22).

4. The battery module according to claim 1,
wherein the connector (23) comprises an elongation portion (23a) having a relatively higher elongation than the peripheral region.

5. The battery module according to claim 4,
wherein the elongation portion (23a) corresponds to a region made of a metal having a relatively higher elongation compared to the peripheral region.

6. The battery module according to claim 4,
wherein the elongation portion (23a) corresponds to a region formed to be thinner than the peripheral region.

7. A battery pack (3) comprising a battery module (1) according to any one of claims 1 to 6.

8. A vehicle (4) comprising a battery pack (3) according to claim 7.

## Patentansprüche

1. Batteriemodul (1) aufweisend:
einen Zellenstapel (10), der mehrere Batteriezellen aufweist; und
ein Modulgehäuse (20), das eine Basisplatte (21), welche eine untere Oberfläche des Zellenstapels (10) bedeckt, eine Abdeckplatte (22), welche eine obere Oberfläche des Zellenstapels (10) bedeckt, und einen Verbinder (23), welcher die Basisplatte (21) und die Abdeckplatte (22) verbindet, aufweist und den Zellenstapel (10) aufnimmt,
wobei die Basisplatte (21) und die Abdeckplatte (22) eine gekrümmte Form derart aufweisen, dass deren zentrale Bereiche näher an dem Zellenstapel (10) liegen als die Randbereiche,
**dadurch gekennzeichnet, dass**
der Zellenstapel (10) ferner ein Paar schwellungabsorbierender Pads (12) aufweist, die an beiden äußersten Seiten des Zellenstapels (10) in einer Stapelrichtung (Z) angeordnet sind, und
jedes des Paars schwellungabsorbierender Pads (12) eine Form aufweist, bei der die Dicke des zentralen Bereichs dünner ist als die der Randbereiche.

2. Batteriemodul nach Anspruch 1,
wobei jedes des Paars schwellungabsorbierender Pads (12) eine gestufte Form derart aufweist, dass die Oberflächen, die der Basisplatte (21) und der Abdeckplatte (22) zugewandt sind, von den Randbereichen in Richtung des zentralen Bereichs niedriger werden.

3. Batteriemodul nach Anspruch 1,
wobei jedes des Paars schwellungabsorbierender Pads (12) eine gekrümmte Form derart aufweist, dass die Oberflächen, die der Basisplatte (21) und der Abdeckplatte (22) zugewandt sind, in vollständigem Kontakt mit der Basisplatte (21) und der Abdeckplatte (22) sind.

4. Batteriemodul nach Anspruch 1,
wobei der Verbinder (23) einen Verlängerungsabschnitt (23a) aufweist, der eine vergleichsweise höhere Verlängerung als der Umfangsbereich aufweist.

5. Batteriemodul nach Anspruch 4,
wobei der Verlängerungsabschnitt (23a) einem Bereich entspricht, der aus einem Metall hergestellt ist, das eine vergleichsweise höhere Verlängerung im Vergleich zu dem Umfangsbereich aufweist.

6. Batteriemodul nach Anspruch 4,
wobei der Verlängerungsabschnitt (23a) einem Bereich entspricht, der so ausgebildet ist, dass er dünner ist als der Umfangsbereich.

7. Batteriepack (3) aufweisend ein Batteriemodul (1) nach einem der Ansprüche 1 bis 6.

8. Fahrzeug (4) aufweisend einen Batteriepack (3) nach Anspruch 7.

## Revendications

1. Module de batterie (1) comprenant :
un empilement de cellules (10) comprenant une pluralité de cellules de batterie ; et
un boîtier de module (20) comprenant une embase (21) couvrant une surface inférieure de l'empilement de cellules (10), une plaque de couverture (22) couvrant une surface supérieure de l'empilement de cellules (10), et un connecteur (23) reliant l'embase (21) à la plaque de couverture (22), et recevant l'empilement de cellules (10),
l'embase (21) et la plaque de couverture (22) ayant une forme courbe de sorte que leur zone centrale se situe plus près de l'empilement de cellules (10) que les zones marginales,
**caractérisé en ce que**
l'empilement de cellules (10) comprend en outre une paire de tampons absorbants gonflants (12) disposés des deux côtés extérieurs de l'empilement de cellules (10) dans une direction de l'empilement (Z), et
la forme de chacun de la paire de tampons absorbants gonflants (12) est telle que l'épaisseur de la zone centrale est inférieure à celle des zones marginales.

2. Module de batterie selon la revendication 1,
chacune de la paire de tampons absorbants gonflants (12) présentant une forme étagée, de sorte que les surfaces faisant face à l'embase (21) et à la plaque de couverture (22) deviennent plus basses des zones marginales à la zone centrale.

3. Module de batterie selon la revendication 1,
chacun de la paire de tampons absorbants gonflants (12) présentant une forme incurvée de sorte que les surfaces faisant face à l'embase (21) et à la plaque de couverture (22) soient en contact intégral avec l'embase (21) et la plaque de couverture (22).

4. Module de batterie selon la revendication 1,
le connecteur (23) comprenant une portion d'allongement (23a) présentant un allongement relativement plus élevé que la zone périphérique.

5. Module de batterie selon la revendication 4,
la partie d'allongement (23a) correspondant à une zone composée d'un métal présentant une allongement relativement plus élevé par rapport à la zone périphérique.

6. Module de batterie selon la revendication 4,
la partie d'allongement (23a) correspondant à une zone formée pour être plus mince que la zone périphérique.

7. Bloc-batterie (3) comprenant un module de batterie (1) selon une quelconque des revendications 1 à 6.

8. Véhicule (4) comprenant le bloc-batterie (3) selon la revendication 7.
